# EUROPEAN PATENT APPLICATION

(11) **EP 0 683 586 A2**
(43) Date of publication of application: **22.11.1995**
(21) Application number: 95107807.0
(22) Date of filing: 22.05.1995
(51) Int. Cl.: H04L 27/14

(54) **FSK receiver**

(30) Priority: 20.05.1994 US 246528
(71) Applicant: TEXAS INSTRUMENTS DEUTSCHLAND GMBH, D-85356 Freising (DE)
(72) Inventor: Schuermann, Josef, I-85416 Oberhummel (DE); Hagl, Andreas, D-85221 Dachau (DE)
(74) Representative: Schwepfinger, Karl-Heinz, Dipl.-Ing.

(57) **Abstract**

An object of the invention in to provide a low-cost FSK receiver which self-calibrates itself such that demodulation of the FSK data stream is performed significantly are reliably with the least amount of additional cost and components. The reference setting for the comparator in the demodulator, which distinguishes between two different D.C. levels to yield either a high or low bit, is derived from the same oscillator that is used to generate the exciter signal. In addition, the generated reference setting signal is subjected to the same FSK signal processing chain as the IF frequencies described above, in order to provide a DC reference equivalent to the mid-FSK frequency. This results in a drift-free and stable reference input to the comparator which levels itself for integration, not requiring any level adjustment or trimming and adjusts for aging and drift.

## Description

### FIELD OF THE INVENTION

This invention generally relates to Frequency Shift Keying receivers in any digital data transmission system.

### BACKGROUND OF THE INVENTION

Many different modulation schemes are used in digital transmission systems today. Most systems operating in the RF frequency band use amplitude modulation (AM), phase modulation (PM) or frequency modulation (FM), or some derivative of these modulation schemes. Remote RF identification (ID) systems is a growing field where modulation schemes abound. One example of a remote RE ID system comprises a reader which transmits a powering pulse to a transponder lying within the range of the reader. The transponder sends a modulated data stream representative of an identification code or some sensor information back to the reader where the data is demodulated by the reader. In remote RF ID systems, resilience to noise interference is a necessity when choosing a adulation scheme. Therefore, generally some form of frequency modulation is utilized due to it's greater resilience to noise than either amplitude or phase modulation schemes.

One type of frequency modulation oftentimes used is Frequency Shift Keying (FSK), where two different frequencies are alternated in dependence upon the digital data stream comprised of high and low data bits that is being modulated. FSK modulation has many advantages such as ease of facilitation, noise resiliency and narrow bandwidth requirements. Narrow bandwidth requirements translate into higher noise immunity and spectrum efficiency, both advantageous characteristics. In addition, FSK modulation works well when the two frequencies are shifted far apart from one another and equally as well when the two frequencies are relatively close to one another on the frequency scale. However, when the two frequencies are relatively close to one another, i.e. separated by 10 KHz, demodulation of the data received by the reader may be more difficult.

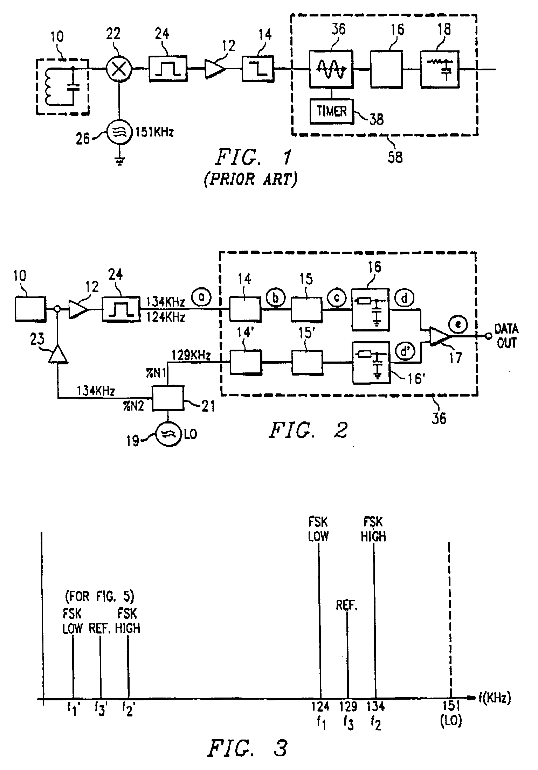

One possible method of demodulation of the FSK data is shown in Figure **1**. The FSK response signal is received by antenna circuit **10** and heterodyned down to 21.8 KHz via mixer **22** which mixes the transponder mid-frequency of 129.2 KHz with LO source **26** of 151 KHz. The IF frequencies are selectively band filtered out of the range of frequencies coming from the output of mixer circuit **22** by the selective either bandpass or lowpass filter **24**. The band filtered signals are then selectively amplified by the amplifier **12**. Those amplified signals are then amplitude limited by the limiter/comparator circuit **14** and then demodulated by the FSK Demodulator circuit **58**.

A possible configuration for a demodulator **58** and it's operation follows. A zero detector circuit **36** combined with a timer circuit **38** performs the function of demodulating the baseband signals to determine which bit, respectively the low or high bit FSK frequency, is being sent. The demodulation can be performed by determining the number of zero crossings in a given time duration via circuit **36** wherein the timer circuit **38** provides the time base reference. The amount of time elapsed between one zero crossing to another zero crossing will be different for different frequencies, i.e. 124.2 KHz and 134.2 KHz, and therefore the number of zero crossings in the same amount of time will be different for different frequencies. From the output of circuit **36** comes a train of pulses of constant width and various periods, depending upon how many zero crossings were detected, which subsequently gets shaped by monoflop **16** into a well defined pulse. This well defined pulse is then integrated through integrator **18** which yields different D.C. levels. A Schmitt Trigger can be used to distinguish between the two D.C. levels and yield either the high or low FSK bit. Herein lies one of the problems encountered in demodulation of the FSK modulated data. Distinguishing between the low and high bit when there is little shift between the two frequencies can prove to be difficult because the D.C. levels can differ very little. Since the D.C. levels can differ very little, depending upon the FSK shift, the reference setting for a comparator to differentiate between two D.C. levels is critical.

### SUMMARY OF THE INVENTION

An object of the invention is to provide a low-cost FSK receiver which self-calibrates itself such that demodulation of the FSK data stream is performed significantly more reliably with the least amount of additional cost and components and is easily integrateable into existing receiver systems. The reference setting for the comparator in the demodulator, which distinguishes between two different D.C. levels to yield either a high or low bit, is derived from the same oscillator that is used as LO to derive the IF frequencies. Another option is to use the time base oscillator from the microprocessor to derive a frequency base. In addition, the generated reference setting signal is subjected to the same FSK signal processing chain as the IF frequencies described above, in order to provide a DC reference equivalent to the mid-FSK frequency. This results in a drift-free and stable reference input to the comparator which reduces the Integrated Receiver tolerances, because drifts are cancelled. In other words, when all the components which make up the invention, i.e. amplifiers, comparators and monoflops, are part of the same integrated circuit (IC), then when IC tolerances vary, these components will all vary similarly and thus the drifts will be transparent from one component relative to another.

### BRIEF DESCRIPTION OF THE DRAWINGS

The invention will be explained in greater detail with reference to an example of an embodiment shown in the drawings, in which:
FIG. 1 is a prior art schematic diagram of the demodulation components of a reader.
FIG. 2 is a schematic diagram of one preferred embodiment of the invention.
FIG. 3 is a spectrum analysis of the reference and FSK high and low bits with regards to Figures 2 and 5.
FIG. 4 is a state diagram which shows the state of the received signal at the inputs 14 and 14' in the reader of Figure 2.
FIG. 5 is a schematic diagram of a second preferred embodiment of the invention including the mixer of the reader.

Corresponding numerals and symbols in the different figures refer to corresponding parts unless otherwise indicated.

### DETAILED DESCRIPTION OF PREFERRED EMBODIMENTS

Those components of the demodulator, in the reader, that provide a drift-free stable reference setting for the comparator are schematically shown in Figure 2. The FSK signals, once received by antenna **10**, are amplified by amplifier circuit **12**, band-filtered by band-filter circuit **24** and demodulated by a demodulator circuit **36**. Demodulator circuit **36** consists of two signal processing paths. The first signal processing path is the FSK signal path with the limiter/comparator circuit **14** followed by a monoflop **15** and an integrator **16**. The second signal processing path is the reference signal path which has the same processing steps as the FSK signal path. The second signal processing path yields a single output D.C. level used as reference for the Schmitt trigger circuit **17**.

A more detailed explanation of the signal processing paths follows. Once received, the amplified, band-filtered FSK signal is applied to the input of limiter/comparator circuit **14**, and passed through a monoflop **15** which outputs a train of pulses of constant width and various periods, according to the received FSK frequencies. This train of pulses is then integrated by integrator circuit **16**. Integrator circuit **16** provides a DC level representative of the received FSK signal to the first input of a Schmitt trigger or comparator circuit **17**.

The same signal local oscillator (LO) **19** which derives the exciter signal for powering the transponder, derives the reference signal for the schmitt trigger/comparator circuit **17**. The LO signal of fo frequency is divided by divider **21** to provide two outputs, fo divided by N1 and fo divided by N2. Frequency signal fo divided by N1 provides a stable reference signal with a mid-FSK bit frequency of 129 KHz to the input of the limiter-comparator **14'**. The reference signal then passes through a monoflop **15'** and an integrator circuit **16'** or is processed similarly as the above-mentioned channel. The output of integrator circuit **16'**, provides a stable DC reference to the second input of the comparator/schmitt trigger circuit **17**.

Finally, the comparator/schmitt trigger circuit **17** distinguishes between the reference signal DC level and the received FSK signal DC level to yield either a high or low bit. Due to the fact that the components in both circuit processing paths exist as part of the same IC, as the tolerances of each IC vary characteristics of the components, those characteristics will all vary similarly. In this way, a stable DC reference frequency signal is reliably generated with minimal cost and with a minimal amount of added complexity to the IC.

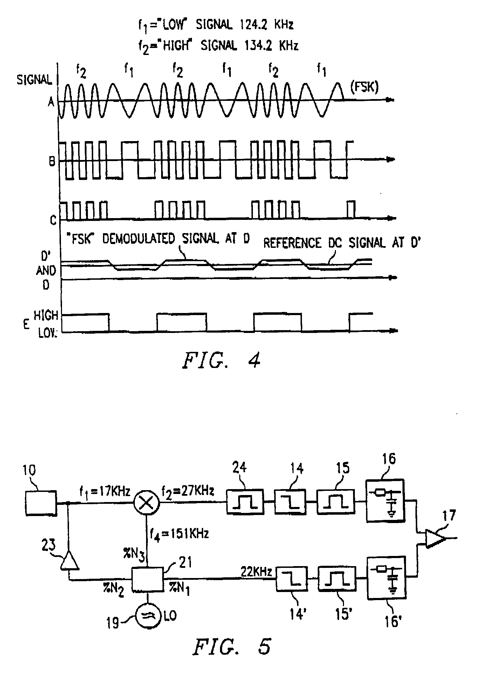

Figure 3 shows a spectrum analysis of the FSK low and high frequencies as well as the reference frequency and the originating LO frequency. Figure 3 also shows frequencies f1', f2', and f3' which represent the baseband FSK frequencies once mixed down via mixer **22** of Figure 5.

Figure 4 is a state diagram of the FSK and reference signals as they progress through the demodulation processing steps of the limiter/comparators, the monoflops, the integrators and finally the comparator/schmitt trigger circuit **17** as shown in Figure **2**. "a" shows the received FSK high and low frequency signals. "b" shows the FSK signals after having been limited by the limiter/comparator circuit **14**. "c" shows the limited FSK signals after being shaped into pulses of equal magnitude, width and various periods depending upon the frequencies of the received FSK signals by comparator **14** and monoflop **15**. "d' & d" shows the shaped FSK pulses after having been integrated by integrator **16**, depicting the slight variation between the two resulting D.C. levels, the D.C. level representing the FSK signal and the D.C. level representing the reference signal. "d' & d" emphasizes the need for an accurate, drift-free reference signal. "e" shows the high and low bits which result upon application of "d" and "d'" signals to the input of comparator/schmitt trigger circuit **17**. Comparator/schmitt trigger circuit **17** compares the FSK D.C. signal level to the D.C. level of the reference signal and yields a high or low bit in response as shown in "e".

Figure 5 is an extension of the embodiment described in Figure 2, including the mixing portion of the demodulation sequence. In this embodiment, the received FSK signals are mixed down to an intermediate frequency (IF) via mixer **22** while the reference signal is derived from a different divider ratio. Both the IF FSK signals and the reference signal are similarly processed in the same manner as described above in Figure **2**. The D.C. level delta between the reference signal D.C. level which results upon integration of the reference signal and the IF FSK signal D.C. level which results upon integration of the IF FSK signal will be similar, just the starting IF FSK frequency will be lower than the frequency of the FSK signal received.

Although the above embodiments have described using the same signal generator to generate both the exciter and the reference signals, or using the same signal generator to generate the exciter, the local oscillator and the reference signals, this invention also includes demodulation systems which use a separate signal generator for any and all exciter, local oscillator and reference signal generating functions.

A few preferred embodiments have been described in detail hereinabove. It is to be understood that the scope of the invention also comprehends embodiments different from those described, yet within the scope of the claims.

While this invention has been described with reference to illustrative embodiments, this description is not intended to be construed in a limiting sense. Various modifications and combinations of the illustrative embodiments, as well as other embodiments of the invention, will be apparent to persons skilled in the art upon reference to the description. It is therefore intended that the appended claims encompass any such modifications or embodiments.

## Claims

1. A signal receiver for a digital data transmission system comprising:
a signal generator for generating an exciter signal and a reference signal;
an antenna for transmitting said exciter signal and receiving a received signal;
circuitry for comparing a first input and a second input and yielding a digital signal
a first circuit for demodulating the received signal, wherein said output of said first circuit is said first input to said circuitry for comparing the first and second inputs; and
a second circuit for demodulating said reference signal, wherein said output of said second circuit is said second input to said circuitry for comparing a first input and a second input.

2. The receiver according to claim 1, wherein the or each of the first and second circuits comprise;
a limiter/comparator for limiting said received signal;
a shaping circuit for shaping the received signal; and
an integrator for integrating said shaped received signal into a voltage level.

3. The receiver according to claims 1-2, wherein said received signal is an FSK signal.

4. The receiver according to claims 1-3, wherein said signal generator further generates a local oscillator signal.

5. The receiver according to claim 4, further comprising;
a mixer circuit for mixing said received signals with said local oscillator signal, and for providing intermediate frequency signals.

6. The receiver according to claim 4-5, wherein said received signal is an intermediate frequency signal.

7. The receiver according to claims 1-6 further comprising;
a divider for dividing the signal frequency of said signal generated by said signal generator into a first frequency for said exciter signal and a second frequency for said reference signal.

8. The receiver according to claim 7, wherein said divider provides a third frequency for said local oscillator signal.

9. The receiver according to claims 1-8, wherein said signal generator comprises a first signal generator for generating said exciter signal and a second signal generator for generating said reference signal.

10. The receiver according to claims 1-8, wherein said signal generator comprises a single signal generator for generating both said exciter signal and said reference signal.

11. The receiver according to claims 1-10, wherein said first and second circuits are part of the same integrated circuit.

12. A method of receiving a signal for a digital data transmission system comprising;
generating an exciter signal and a reference signal;
transmitting said exciter signal and receiving a received signal;
demodulating said received signal to produce a first signal, and demodulating the reference signal to produce a reference level;
comparing the voltage level of said first signal and said reference level and generating a digital signal indicative of a difference in the voltage level of said first signal and the reference level.
